# FASCICULE DE BREVET EUROPEEN

(11) **EP 1 961 637 B1**
(45) Date de publication et mention de la délivrance du brevet: **27.05.2009**
(21) Numéro de dépôt: 07300810.4
(22) Date de dépôt: 22.02.2007
(51) Int. Cl.: B60T 13/575, G01L 1/06

(54) **Capteur de force pour disque de réaction d'un servofrein**
Kraftaufnehmer für Bremskraftverstärker-Reaktionsscheibe
Force sensor for brake servo reaction disc

(43) Date de publication de la demande: 27.08.2008
(73) Titulaire: Delphi Technologies, Inc., Troy, MI 48007 (US)
(72) Inventeur: Lemaire, Jean-Christophe, 92110 Clichy la Garenne (FR); Castel, Philippe, 75005 Paris (FR)
(74) Mandataire: Denton, Michael John

(56) Documents cités:
- EP-A- 1 741 608
- DE-A1- 10 222 517
- FR-A1- 2 848 969
- FR-A1- 2 855 135
- FR-A1- 2 857 641
- GB-A- 386 013

## Description

La présente invention se rapporte à un capteur de force, en particulier pour la pédale de frein d'un véhicule automobile, et à un dispositif de commande de freinage.

Dans les véhicules automobiles équipés de freins électriques, il est connu d'utiliser une pédale de frein équipée de capteurs de force. La force appliquée sur la pédale est en effet une bonne indication de l'intention du conducteur, à l'inverse de la course de la pédale. Un capteur de force connu comprend un transducteur électrique, par exemple un cristal piézoélectrique, qui produit un signal électrique de très faible intensité, même pour des forces importantes. En conséquence, le signal électrique n'est pas utilisable directement. Il doit être amplifié et décorrélé du bruit environnant avant d'être mesuré et utilisé pour la commande du freinage. Pour ces raisons, le coût d'un capteur de force est relativement élevé.

De plus, dans les véhicules connus, la pédale de frein est équipée de plusieurs capteurs de force, par exemple trois, pour prendre en compte les éventuelles pannes des capteurs ou de la pédale : si un capteur est en panne, les deux autres peuvent délivrer un signal correct. Le coût d'un capteur de force est donc d'une importance particulière.

GB-386,013 décrit un capteur de force comprenant un disque de réaction déformable et un capteur de déplacement.

La présente invention a pour but de proposer un capteur de force ou de pression qui ne présente pas au moins certains des inconvénients précités de l'art antérieur. En particulier, l'invention vise à fournir un capteur de force ou de pression dont le signal de sortie peut être facilement exploité, c'est-à-dire qu'il ne nécessite pas une amplification ou un traitement compliqué.

Pour cela, l'invention fournit un capteur de force ou de pression caractérisé par le fait qu'il comprend un disque de réaction, un corps présentant un évidement agencé de manière que quand une force est appliquée sur le disque de réaction, le disque de réaction se déforme et s'enfonce dans l'évidement, et un capteur de déplacement apte à mesurer un déplacement qui dépend de l'enfoncement du disque de réaction dans l'évidement.

Grâce à ces caractéristiques, la force à mesurer est convertie en une déformation du disque de réaction. La déformation du disque de réaction produit un déplacement dont l'amplitude peut être mesurée par le capteur de déplacement, et le capteur de déplacement délivre un signal de sortie qui peut être facilement exploité. Le signal de sortie ne nécessite pas ou peu d'amplification ou de traitements d'un autre type. Le signal de sortie peut être utilisé directement et le capteur de force peut être produit à bas coût.

De préférence, le disque de réaction comprend un élément en matière élastomère.

Un disque de réaction de ce type permet de produire un déplacement d'amplitude facilement mesurable, même pour une faible force. Le disque de réaction peut par exemple être du type utilisé dans les amplificateurs de freinage.

Avantageusement, le capteur de force comprend un curseur agencé dans l'évidement de manière à se déplacer sous l'effet de l'enfoncement du disque de réaction, le capteur de déplacement étant apte à mesurer le déplacement du curseur.

Ainsi, le capteur de déplacement mesure le déplacement d'un curseur qui peut présenter une surface plane et rigide, ce qui facilite la mesure.

Selon un mode de réalisation, le capteur de déplacement est agencé dans l'évidement.

De préférence, le capteur de force comprend un cylindre de réception, ledit disque de réaction étant agencé à l'intérieur du cylindre de réception, le cylindre de réception étant apte à se déplacer par rapport audit corps pour exercer une force sur le disque de réaction.

L'invention fournit également un dispositif de commande de freinage, caractérisé par le fait qu'il comprend un capteur de force selon l'invention ci-dessus et une unité de commande de freinage apte à déterminer un signal de commande de freinage en fonction du déplacement mesuré par le capteur de déplacement.

Avantageusement, le dispositif de commande de freinage comprend un capteur de température, l'unité de commande étant apte à déterminer ledit signal de commande en fonction de la température mesurée par le capteur de température.

De préférence, le dispositif de commande de freinage comprend une pédale de frein, le capteur de force étant agencé de manière à mesurer une force exercée sur ladite pédale de frein.

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux dessins annexés. Sur ces dessins :
- la figure 1 est une vue en coupe d'un capteur de force selon un mode de réalisation de l'invention, quand aucune force n'est appliquée,
- la figure 2 est une vue en coupe du capteur de la figure 1, quand une force non nulle est appliquée.

Le capteur de force 1 comprend un support 2 permettant sa fixation. Un piston 8 est fixé sur le support 2. Le capteur de force comprend également un cylindre de réception 4. Le piston 8 est agencé partiellement dans le cylindre de réception 4, et le cylindre de réception est mobile par rapport au piston 8. Un cylindre externe 3 entoure le cylindre de réception 4 et est mobile par rapport à celui-ci.

Le cylindre externe 3, le cylindre de réception 4 et le piston 8 présentent par exemple une symétrie de révolution et sont mobiles les uns par rapport aux autres selon une direction axiale.

Un ressort hélicoïdal 5 est agencé entre une paroi de fond 12 du cylindre externe 3 et une paroi de fond 13 du cylindre de réception 4. La paroi de fond 13 présente un lamage 6 pour la réception d'une extrémité du ressort hélicoïdal 5.

Un disque de réaction 7 est agencé dans le cylindre de réception 4, au niveau de la paroi de fond 13. Le disque de réaction 7 est un corps réalisé en matière élastomère, par exemple en caoutchouc, du type utilisé dans les amplificateurs de freinage, comme par exemple dans le document FR-2 857 641-A1. Le choix du matériau et le dimensionnement du disque de réaction 7 peuvent conduire aux même matériaux et dimensions que ceux utilisés pour les amplificateurs de freinage. Dans l'exemple représenté, le disque de réaction 7 présente, en l'absence de force exercée, une forme de cylindre de révolution de faible hauteur par rapport à son diamètre. Toutefois le disque de réaction 7 pourrait présenter d'autres formes et le mot « disque » ne doit pas être compris comme étant limité à un corps cylindrique de révolution.

Le piston 8 présente une face d'extrémité 14 qui est en contact avec le disque de réaction 7. Un évidement 9 est ménagé dans le piston 8, et débouche au niveau de la face d'extrémité 14. Un curseur 10 est agencé dans l'évidement 9, et un capteur de déplacement 11 est prévu pour mesurer le déplacement du curseur 10. Il existe ne nombreux types de capteurs de déplacement, simples et bon marché, et qui fournissent un signal de sortie facilement exploitable, qui peuvent convenir pour réaliser le capteur de force 1.

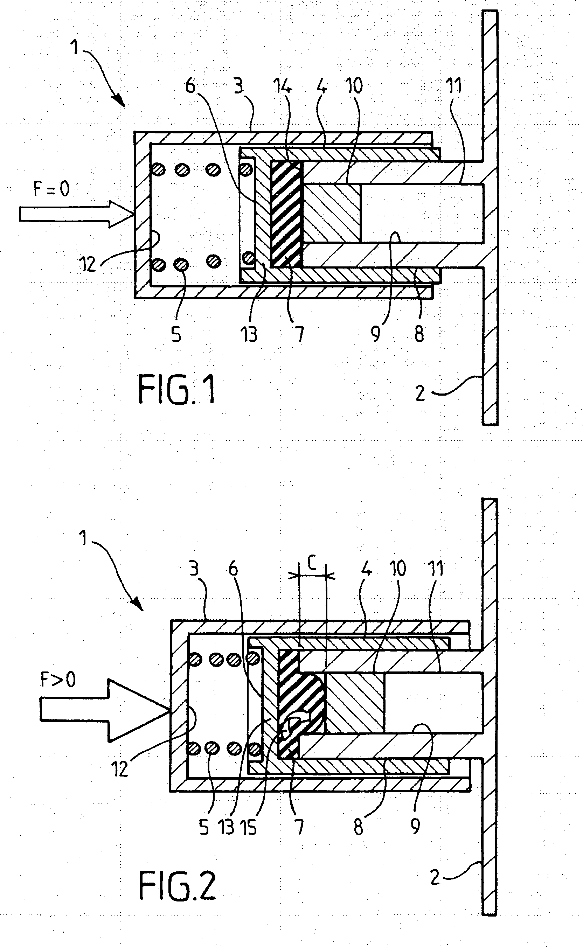

La figure 1 représente le capteur de force 1 à l'état de repos, c'est-à-dire que la force F exercée sur le cylindre extérieur 3 est nulle. Dans cet état le disque de réaction 7 ne subit aucune force et n'est pas déformé. Le curseur 10 se trouve au niveau de l'extrémité de l'évidement 9 et affleure avec la face d'extrémité 14.

La figure 2 représente le capteur de force 1 quand une force F non nulle est appliquée sur le cylindre externe 3, de manière à le rapprocher du support 2. Le déplacement du cylindre externe 3 est transmis au cylindre de réception 4 par le ressort 5. Le disque de réaction 7 est donc comprimé entre la paroi de fond 13 du cylindre de réception 4, et la face d'extrémité 14 du piston 8 qui est fixe par rapport au support 2. Le disque de réaction 7 se déforme donc et s'enfonce partiellement dans l'évidement 9, comme le montre la flèche 15. Cet enfoncement a pour effet de pousser le curseur 10 vers le support 2. Le capteur de déplacement 11 mesure le déplacement C du curseur 10.

Le déplacement C est fonction de la force F. La relation n'est pas nécessairement linéaire et peut présenter une hystérésis. Le signal de sortie du capteur de déplacement 11, qui est aussi le signal de sortie du capteur de force 1, est donc représentatif de la force F.

Le capteur de force 1 peut être utilisé pour mesurer la force exercée sur une pédale de frein. Pour cela, le capteur de force 1 est fixé de manière appropriée, par exemple le support 2 est fixé sur la pédale et le cylindre externe 3 est fixé à un point fixe de la carrosserie. Bien entendu, le capteur de force 1 peut être utilisé pour d'autres applications.

Une unité de commande (non représentée) reliée au capteur de force 1 peut déterminer un signal de commande de freinage en fonction du déplacement C mesuré, en tenant compte de la relation entre le déplacement C et la force F. Cette relation peut dépendre de la température. Dans un mode de réalisation, un capteur de température est donc relié à l'unité de commande.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Dispositif de commande de freinage, comprenant un capteur de force et une unité de commande de freinage, **caractérisé en ce que** ledit capteur de force ou de pression (1) comprenant un disque de réaction (7), un corps (8) présentant un évidement (9) agencé de manière que quand une force est appliquée sur le disque de réaction, le disque de réaction se déforme et s'enfonce dans l'évidement, et un capteur de déplacement (11) apte à mesurer un déplacement (C) qui dépend de l'enfoncement du disque de réaction dans l'évidement, ladite unité de commande de freinage étant apte à déterminer un signal de commande de freinage en fonction du déplacement mesuré par le capteur de déplacement.

2. Dispositif de commande selon la revendication 1, dans lequel le disque de réaction (7) comprend un élément en matière élastomère.

3. Dispositif de commande selon l'une des revendications 1 à 2, comprenant un curseur (10) agencé dans l'évidement de manière à se déplacer sous l'effet de l'enfoncement du disque de réaction, le capteur de déplacement étant apte à mesurer le déplacement du curseur.

4. Dispositif de commande selon l'une des revendications 1 à 3, dans lequel ledit capteur de déplacement est agencé dans ledit évidement.

5. Dispositif de commande selon l'une des revendications 1 à 4, comprenant un cylindre de réception (4), ledit disque de réaction étant agencé à l'intérieur du cylindre de réception, le cylindre de réception étant apte à se déplacer par rapport audit corps pour exercer une force sur le disque de réaction.

6. Dispositif selon l'une des revendications 1 à 5, comprenant un capteur de température, l'unité de commande étant apte à déterminer ledit signal de commande en fonction de la température mesurée par le capteur de température.

7. Dispositif selon l'une des revendications 1 à 6, comprenant une pédale de frein, le capteur de force étant agencé de manière à mesurer une force exercée sur ladite pédale de frein.

## Claims

1. Braking control device, comprising a force sensor and a braking control unit, **characterised by** the fact that the said force or pressure sensor (1) comprising a reaction disc (7), a body (8) presenting a cavity (9) so arranged that when a force is applied to the reaction disc, the reaction disc is deformed and penetrates the cavity, and a displacement sensor (11) able to measure a displacement (C) which depends on the penetration of the reaction disc into the cavity, the said braking control unit being able to determine a braking control signal as a function of the displacement measured by the displacement sensor.

2. Control device as described in claim 1, in which the reaction disc (7) comprises an element made of elastomeric material.

3. Control device as described in one of claims 1 to 2, comprising a slider (10) so arranged in the cavity as to be displaced under the influence of the penetration of the reaction disc, the displacement sensor being able to measure the displacement of the slider.

4. Control device as described in one of claims 1 to 3, in which the said displacement sensor is arranged in the said cavity.

5. Control device as described in one of claims 1 to 4, including a reception cylinder (4), the said reaction disc being arranged inside the reception cylinder, the reception cylinder being able to be displaced relative to the said body to apply a force to the reaction disc.

6. Device as described in one of claims 1 to 5, including a temperature sensor, the control unit being able to determine the said control signal as a function of the temperature measured by the temperature sensor.

7. Device as described in one of claims 1 to 6, including a brake pedal, the force sensor being so arranged as to measure a force applied to the said brake pedal.

## Patentansprüche

1. Bremssteuervorrichtung, die einen Kraftaufnehmer und eine Bremssteuereinheit umfasst, **dadurch gekennzeichnet, dass** der genannte Kraft-oder Druckaufnehmer (1) Folgendes umfasst: eine Reaktionsscheibe (7), einen Körper (8) mit einem Hohlraum (9), der so gestaltet ist, das sich die Reaktionsscheibe, wenn sie mit einer Kraft beaufschlagt wird, verformt und in den Hohlraum eindrückt, und einen Verschiebungsaufnehmer (11) zum Messen einer Verschiebung (C), die vom Eindrücken der Reaktionsscheibe in den Hohlraum abhängt, wobei die genannte Bremssteuereinheit die Aufgabe hat, ein Bremssteuersignal in Abhängigkeit von der von dem Verschiebungsaufnehmer gemessenen Verschiebung zu ermitteln.

2. Steuervorrichtung nach Anspruch 1, bei der die Reaktionsscheibe (7) ein Element aus einem elastomeren Material aufweist.

3. Steuervorrichtung nach einem der Ansprüche 1 bis 2, das einen Schieber (10) umfasst, der so in dem Hohlraum angeordnet ist, dass er sich unter der Wirkung des Eindrückens der Reaktionsscheibe verschiebt, wobei der Verschiebungaufnehmer die Aufgabe hat, die Verschiebung des Schiebers zu messen.

4. Steuervorrichtung nach einem der Ansprüche 1 bis 3, wobei der genannte Verschiebungsaufnehmer in dem genannten Hohlraum angeordnet ist.

5. Steuervorrichtung nach einem der Ansprüche 1 bis 4, die einen Aufnahmezylinder (4) umfasst, wobei die genannte Reaktionsscheibe im Innern des Aufnahmezylinders angeordnet ist, wobei der Aufnahmezylinder so gestaltet ist, dass er sich in Bezug auf den genannten Körper verschiebt, um eine Kraft auf die Reaktionsscheibe aufzubringen.

6. Steuervorrichtung nach einem der Ansprüche 1 bis 5, der einen Temperaturaufnehmer umfasst, wobei die Steuereinheit die Aufgabe hat, das genannte Steuersignal in Abhängigkeit von der vom Temperaturaufnehmer gemessenen Signal zu bestimmen.

7. Steuervorrichtung nach einem der Ansprüche 1 bis 6, die ein Bremspedal umfasst, wobei der Kraftaufnehmer so gestaltet ist, dass er eine auf das genannte Bremspedal aufgebrachte Kraft misst.
